(19) Europäisches Patentamt
European Patent Office
Office européen des brevets

(11) **EP 2 418 185 A2**

(12) **EUROPEAN PATENT APPLICATION**
published in accordance with Art. 153(4) EPC

(43) Date of publication:
**15.02.2012 Bulletin 2012/07**

(51) Int Cl.:
**C04B 18/06** (2006.01)  **C04B 14/30** (2006.01)

(21) Application number: **10751001.8**

(86) International application number:
**PCT/KR2010/001451**

(22) Date of filing: **09.03.2010**

(87) International publication number:
**WO 2010/104310 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.03.2009 KR 20090021238**

(71) Applicant: **Samsung Fine Chemicals Co., Ltd. Ulsan-city 680-090 (KR)**

(72) Inventors:
• **LEE, Joon Soo**
  **Ulsan 683-794 (KR)**
• **NOH, Wook Hwan**
  **Daejeon 300-742 (KR)**

(74) Representative: **von Kreisler Selting Werner Deichmannhaus am Dom Bahnhofsvorplatz 1 50667 Köln (DE)**

(54) **CRACK-RESISTANT ADMIXTURE FOR CEMENT MORTAR, AND CEMENT MORTAR COMPRISING SAME**

(57) An admixture for a cement mortar and a cement mortar including the same. The admixture includes at least one of hydroxyethylmethyl cellulose having a degree of substitution (DS) of a methyl group in a range from 1.6 to 2.0 and hydroxypropylmethyl cellulose having a molar substitution MS of a hydroxypropyl group in a range from 0.4 to 1.0.

FIG. 1

EP 2 418 185 A2

**Description**

CROSS-REFERENCE TO RELATED PATENT APPLICATION

This application claims the benefit of Korean Patent Application No. 10-2009-0021238, filed on March 12, 2009, in the Korean Intellectual Property Office, the disclosure of which is incorporated herein in its entirety by reference.

BACKGROUND OF THE INVENTION

1. Field of the Invention

The present invention relates to an admixture for a cement mortar and a cement mortar including the same, and more particularly, to an admixture for a cement mortar including at least one of hydroxyethylmethyl cellulose and hydroxypropylmethyl cellulose each having a degree of substitution within a predetermined range, and a cement mortar including the admixture.

2. Description of the Related Art

A great quantity of mixing water is used in a cement mortar including a cement as a basic binder, for work convenience. Also, cracks are generated on a cement mortar coated on a base as time elapses due to a thin film coating construction, since a contraction process that occurs as surface water evaporates or moisture is absorbed into the base when the cement mortar is exposed to an environmental element, such as a high temperature or wind, and an expansion process that occurs as moisture in atmosphere or rain is reabsorbed into the cement mortar are repeated.

Accordingly, to solve the problem described above, a water demand is minimized by reducing an amount of a cement and increasing an amount of an aggregate while preparing the cement mortar, or fiber is added, thereby reducing the generation of cracks by offsetting a tensile stress generated during contraction with a compressive stress generated by minimizing the water demand or adding the fiber. However, at this time, the cement may be insufficiently hydrated and a working property of the cement may deteriorate.

Alternatively, a large amount of an air entraining (AE) agent may be used to generate a plurality of microbubbles, thereby preventing the generation of cracks by increasing tolerance to the tensile stress generated during the contraction. However, when the AE agent is used, it is difficult to adjust sag resistance even if a small amount of less than 0.005 wt% of the AE agent is included in the cement mortar, due to high fluctuation of an air amount in the cement mortar according to a mixing time, and resistance to the tensile stress may be lowed before hydration is completed as the air amount in the cement mortar gradually decreases as time elapses after mixing.

SUMMARY OF THE INVENTION

According to an aspect of the present invention, there is provided an admixture for a cement mortar including at least one of hydroxyethylmethyl cellulose having a degree of substitution (DS) of a methyl group in a range from 1.6 to 2.0 and hydroxypropylmethyl cellulose having a molar substitution (MS) of a hydroxypropyl group in a range from 0.4 to 1.0.

A total amount of the hydroxyethylmethyl cellulose and the hydroxypropylmethyl cellulose in the admixture may be in a range from 20 to 100 wt% based on a total weight of the admixture.

According to another aspect of the present invention, there is provided a cement mortar including the admixture.

The cement mortar may be a rendering cement mortar.

BRIEF DESCRIPTION OF THE DRAWINGS

The above and other features and advantages of the present invention will become more apparent by describing in detail exemplary embodiments thereof with reference to the attached drawings in which:

FIG. 1 is a graph of an air amount and a contraction percentage according to a degree of substitution (DS) of a methyl group in a cement mortar containing hydroxyethylmethyl cellulose (HEMC), according to an embodiment of the present invention;

FIG. 2 is a graph of an air amount and a contraction percentage according to a molar substitution (MS) of a hydroxypropyl group in a cement mortar containing hydroxypropylmethyl cellulose (HPMC), according to an embodiment of the present invention;

FIG. 3 is a 3-dimensional (3D) graph of an air amount according to a DS of a methyl group and an MS of a hydroxyethyl group in the cement mortar of FIG. 1;

FIG. 4 is a 3D graph of an air amount according to a DS of a methyl group and an MS of a hydroxypropyl group in the cement mortar of FIG. 2.

## DETAILED DESCRIPTION OF THE INVENTION

Hereinafter, the present invention will be described more fully with reference to the accompanying drawings, in which exemplary embodiments of the invention are shown.

An admixture for a cement mortar according to an embodiment of the present invention includes at least one of hydroxyethylmethyl cellulose (HEMC) having a degree of substitution (DS) of a methyl group from 1.6 to 2.0, and hydroxypropylmethyl cellulose (HPMC) having a molar substitution (MS) of a hydroxypropyl group from 0.4 to 1.0. When the DS of HEMC is less than 1.6 and the HEMC is used in the admixture, cracks are generated as a contraction percentage of a cement mortar including the admixture is increased, and when the DS of HEMC is more than 2.0, fluidity deteriorates while working with the cement mortar. Meanwhile, when the MS of HPMC is less than 0.4 and the HPMC is used in the admixture, cracks are generated as the contraction percentage of the cement mortar is increased, and when the MS of HPMC is more than 1.0, fluidity deteriorates while working with the cement mortar. When at least one of the HEMC and the HPMC respectively having the DS and MS in the above ranges is used in the admixture for a cement mortar, the cement mortar including the admixture has a high entrained air amount.

The DS of the methyl group and the MS of the hydroxypropyl group in hydroxypropylmethyl cellulose, for example, may be respectively calculated according to Equations 1 and 2 below.

$$DS(OCH_3) = \frac{\%OCH_3}{31} \times \frac{162}{100 - (\%OCH_3H_6OH / 1.29 + \%OCH_3 \times 0.45)} \quad \dots \quad (1)$$

$$MS(OCH_3H_6OH) = \frac{\%OCH_3H_6OH}{75} \times \frac{162}{100 - (\%OCH_3H_6OH / 1.29 + \%OCH_3 \times 0.45)} \quad \dots \quad (2)$$

In detail, the HEMC and the HPMC are types of surfactants having both a hydrophilic group and a hydrophobic group, and perform an air entraining function according to a surface active function while preparing the cement mortar.

An amount of air entrained into the cement mortar is largely affected by a degree of substitution of a certain substituent in the HEMC and HPMC. For example, the entrained air amount is mainly affected by the DS of the methyl group in the HEMC and the MS of the hydroxypropyl group in the HPMC. Microbubbles entrained into the cement mortar improve contraction resistance, crack resistance, sag resistance, and working properties.

Also, cellulose ether, such as the HEMC and the HPMC, may hold water required for a hydration reaction of a cement in the cement mortar for a long period of time, i.e., may perform a water holding function.

The total amount of the HEMC and the HPMC may be from 20 to 100 wt% based on the total weight of the admixture. When the total amount of the HEMC and the HPMC is less than 20 wt% based on the total weight of the admixture, the cement in the cement mortar may not be sufficiently hydrated due to moisture evaporation when a thin film is formed using the cement mortar including the admixture.

The admixture may further include cellulose ether including at least one of HEMC and HPMC each having a (degree of substitution) (DS) different from those above, and starch ether (STE). Modified STE, such as hydroxypropyl starch or carboxymethyl starch, may be used as the STE. The STE is added to the admixture so as to increase compressibility of the cement mortar and suppress a skinning phenomenon, thereby increasing wetting capability of an adhesion surface between the cement mortar and a base, and an open time of the cement mortar.

Also, another embodiment of the present invention provides a cement mortar including the admixture. Herein, the cement mortar has two different meanings according to circumstances, where one is a dry mix cement mortar including a cement, an admixture, and an aggregate; and the other is a dictionary definition thereof, that is, a cement mortar obtained by kneading the dry mix cement mortar with water.

Here, the total content of the admixture may be increased as a thickness of the cement mortar is decreased, so as to obtain appropriate water holding capacity, and generally, a weight ratio of a cement to the admixture may be generally from 99.9:0.1 to 97:3. If the content of the admixture is less than 0.1, the water holding capacity may be insufficient, and if the content of the admixture is more than 3.0, strength of the cement mortar may decrease.

The cement mortar also includes a cement and an aggregate. A hydraulic cement, such as a Portland cement, a fly ash cement, or an aluminous cement; or a color cement may be used as the cement.

At least one of river sand, pit sand, silica, a lightweight aggregate (for example, pearlite), gypsum hemihydrate, limestone, slaked lime, calcium carbonate, dolomite plaster, clay, emulsion, and a fiber material may be used as the aggregate.

A mixture ratio of the aggregate may be from 30 to 300 wt% compared to a weight of the cement, but is not limited thereto.

Also, the cement mortar is kneaded with water according to a certain method, and the water may be sufficiently added to obtain typical workability of the cement mortar.

Meanwhile, examples of the cement mortar include a rendering cement mortar, a tile cement mortar, a tile joint mortar, a masonry mortar, a grout mortar, a ferroconcrete repair mortar, and a cement mortar for a construction work finishing material or repair material where a cement, such as a cement plaster, is used as a binding material.

The present invention will be described in greater detail with reference to the following examples. The following examples are for illustrative purposes only and are not intended to limit the scope of the invention.

Examples

Examples 1 through 4 and Comparative Examples 1 through 4: Preparation of Cement Mortar

A mixture sample was prepared by mixing a cement (a product of Asia Cement Co., Ltd, generally a Portland cement), limestone, and slaked lime in a weight ratio of 18:77:5 (i.e., cement:limestone:slaked lime). Then, a dry mix cement mortar was prepared by adding and dry-mixing HEMC or HPMC having a certain degree of substitution as shown in Table 1 below, as an admixture with the mixture sample at a ratio of 0.1 wt% compared to a weight of the mixture sample. Next, a cement mortar was prepared by pouring water onto the dry mix cement mortar and mixing the resultant for 1 minute and 30 seconds using a mechanical mixer. Here, the water added thereto was 20 wt% compared to a weight of the dry mix cement mortar.

Examples 5 through 8 and Comparative Examples 5 through 8

A cement mortar was prepared in the same manner as in Examples 1 through 4 and Comparative Examples 1 through 4, except that the dry mix cement mortar was prepared by adding an admixture consisting of 94 wt% of HEMC or HPMC having a certain degree of substitution as shown in Table 2 below, 1 wt% of polyacrylamide (PAA), and 5 wt% of STE to the mixture sample at a ratio of 0.1 wt% compared to the weight of the mixture sample, and 21 wt% of water compared to the weight of the dry mixing cement mortar was added to the dry mix cement mortar.

Evaluation Examples

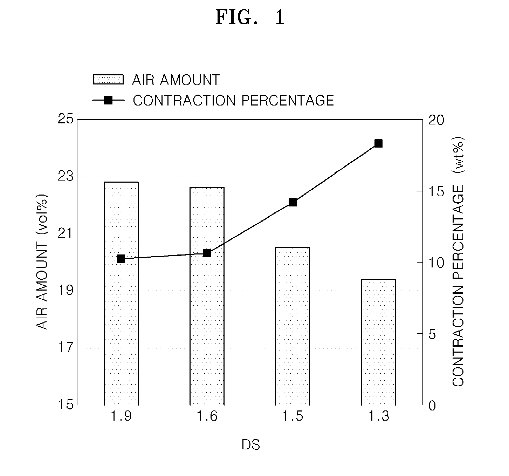

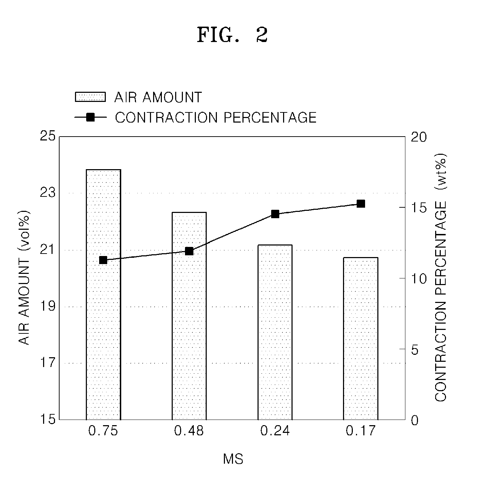

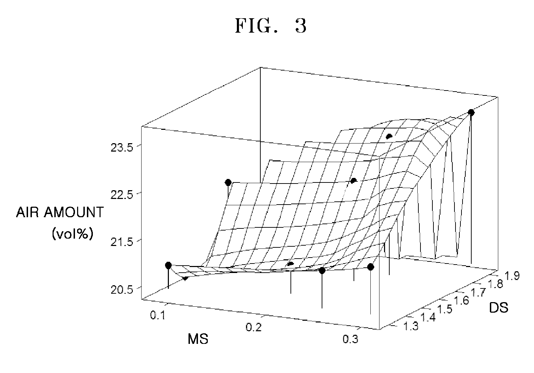

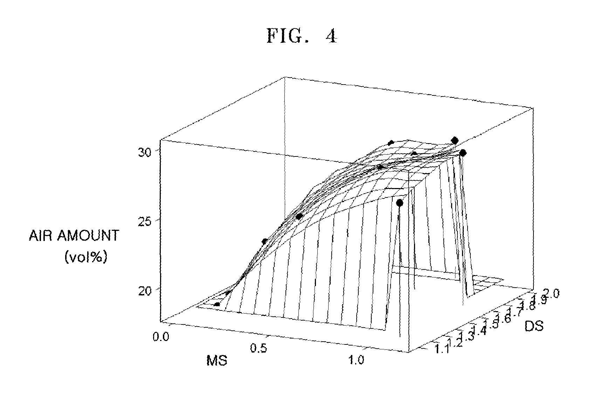

Properties of the cement mortars prepared according to Examples 1 through 8 and Comparative Examples 1 through 8 were measured as follows, and are shown in Tables 1 and 2 and FIGS. 1 through 4. FIGS. 1 through 4 are graphs showing an air amount and/or a contraction percentage according to the degrees of substitution (DS and/or MS) of the cement mortars of Examples 1 through 4 and Comparative Examples 1 through 4.

(1) Measurement of Degree of Substitution of HEMC and HPMC
A reaction product was obtained by ether fission of HEMC or HPMC at 150 using hydrogen iodine. Then, the reaction product was quantitatively analyzed via chromatography to obtain a degree of substitution of each of the HEMC and HPMC.
(2) An entrained air amount and fluidity of the cement mortars were measured according to EN18555.
(3) A contraction percentage and crack generation of the cement mortars were measured using an internal measuring method of Samsung Fine Chemical Ltd.

(a) A specimen is prepared by filling a cement mortar including water into a circular mold having a diameter of 100 mm and a height of 10 mm, and then a weight Wo of the specimen is measured.
(b) The specimen is dried for 1 day at a room temperature.
(c) It is checked whether the dried specimen is cracked with naked eyes.

(d) A weight $W_d$ of the dried specimen is measured.

(e) A contraction percentage of the cement mortar is calculated as follows.

$$\text{Contraction Percentage of Cement Mortar (wt\%)} = (W_0\text{-}W_d)/W_0 \times 100$$

[Table 1]

| | Admixture = (HEMC + HPMC) 100 wt% | | | | | | | |
| --- | --- | --- | --- | --- | --- | --- | --- | --- |
| | Type of Cellulose Ether | DS of Methyl Group | MS of Hydroxyethyl Group | MS of Hydroxypropyl Group | Air Amount (Volume%) | Contraction Percentage (wt%) | Fluidity (mm) | Generation of Cracks |
| Example 1 | HEMC | 1.9 | 0.30 | - | 22.8 | 10.2 | 176 | X |
| Example 2 | HEMC | 1.6 | 0.23 | - | 22.6 | 10.5 | 174 | X |
| Comparative Example 1 | HEMC | 1.5 | 0.27 | - | 20.5 | 14.2 | 177 | ○ |
| Comparative Example 2 | HEMC | 1.3 | 0.28 | - | 19.4 | 18.2 | 174 | ○ |
| Example 3 | HPMC | 1.5 | - | 0.75 | 23.8 | 11.2 | 186 | X |
| Example 4 | HPMC | 1.3 | - | 0.48 | 22.3 | 11.8 | 177 | X |
| Comparative Example 3 | HPMC | 1.8 | - | 0.17 | 21.2 | 14.5 | 178 | ○ |
| Comparative Example 4 | HPMC | 1.5 | - | 0.24 | 20.7 | 15.2 | 179 | ○ |

[Table 2]

| | Admixture = (HEMC + HPMC) 94 wt% + (PAA) 1 wt% + (STE) 5 wt% | | | | | | | |
|---|---|---|---|---|---|---|---|---|
| | Type of Cellulose Ether | DS of Methyl Group | MS of Hydroxyethyl Group | MS of Hydroxypropyl Group | Air Amount (Volume%) | Contraction Percentage (wt%) | Fluidity (mm) | Generation of Cracks |
| Example 5 | HEMC | 1.9 | 0.30 | - | 22.5 | 10.7 | 173 | X |
| Example 6 | HEMC | 1.6 | 0.23 | - | 22.4 | 10.8 | 174 | X |
| Comparative Example 5 | HEMC | 1.5 | 0.27 | - | 20.9 | 15.2 | 173 | ○ |
| Comparative Example 6 | HEMC | 1.3 | 0.28 | - | 20.3 | 19.2 | 170 | ○ |
| Example 7 | HPMC | 1.5 | - | 0.75 | 23.4 | 11.3 | 182 | X |
| Example 8 | HPMC | 1.3 | - | 0.48 | 22.7 | 11.5 | 179 | X |
| Comparative Example 7 | HPMC | 1.8 | - | 0.17 | 21.6 | 15.3 | 175 | ○ |
| Comparative Example 8 | HPMC | 1.5 | - | 0.24 | 21.1 | 16.2 | 174 | ○ |

Referring to Tables 1 and 2 and FIGS. 1 through 4, the cement mortars prepared in Examples 1 through 4 have high entrained air amounts, low contraction percentages, and similar fluidities compared to the cement mortars prepared in Comparative Examples 1 through 4. Also, there are no cracks in the cement mortars prepared in Examples 1 through 4.

Similarly, referring to Tables 1 and 2, the cement mortars prepared in Examples 5 through 8 have high entrained air amounts, low contraction percentages, and similar fluidities compared to the cement mortars prepared in Comparative Examples 5 through 8. Also, there are no cracks in the cement mortars prepared in Examples 5 through 8.

According to the embodiments of the present invention, the admixture for a cement mortar, which can improve contraction resistance and crack resistance of the cement mortar, and maintain sufficient fluidity of the cement mortar, can be provided by increasing an air amount in a cement mortar and minimizing a change of the air amount according to time by including at least one of HEMC and HPMC each having a certain degree of substitution.

Also, according to other embodiments of the present invention, a cement mortar including the admixture can be provided.

While the present invention has been particularly shown and described with reference to exemplary embodiments thereof, it will be understood by those of ordinary skill in the art that various changes in form and details may be made therein without departing from the spirit and scope of the present invention as defined by the following claims.

**Claims**

1. An admixture for a cement mortar comprising at least one of hydroxyethylmethyl cellulose having a degree of substitution (DS) of a methyl group in a range from 1.6 to 2.0 and hydroxypropylmethyl cellulose having a molar substitution (MS) of a hydroxypropyl group in a range from 0.4 to 1.0.

2. The admixture of claim 1, wherein a total amount of the hydroxyethylmethyl cellulose and the hydroxypropylmethyl cellulose in the admixture is in a range from 20 to 100 wt% based on a total weight of the admixture.

3. A cement mortar comprising the admixture according to claim 1 or 2.

4. The cement mortar of claim 3, being a rendering cement mortar.

FIG. 1

FIG. 2

FIG. 3

FIG. 4

## REFERENCES CITED IN THE DESCRIPTION

**Patent documents cited in the description**

- KR 1020090021238